(19) Europäisches Patentamt
European Patent Office
Office européen des brevets

(11) **EP 4 650 405 A1**

(12) **EUROPEAN PATENT APPLICATION**
published in accordance with Art. 153(4) EPC

(43) Date of publication:
**19.11.2025 Bulletin 2025/47**

(21) Application number: **23916076.5**

(22) Date of filing: **27.07.2023**

(51) International Patent Classification (IPC):
*C09D 11/326* (2014.01)    *B41J 2/01* (2006.01)
*B41M 5/00* (2006.01)    *C09D 17/00* (2006.01)

(52) Cooperative Patent Classification (CPC):
**B41J 2/01; B41M 5/00; C09D 11/326; C09D 17/00**

(86) International application number:
**PCT/JP2023/027607**

(87) International publication number:
**WO 2024/150456 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2023 JP 2023003188**

(71) Applicant: **DAINICHISEIKA COLOR &
CHEMICALS MFG. CO., LTD.
Chuo-ku
Tokyo 103-8383 (JP)**

(72) Inventors:
• **SHIMANAKA, Hiroyuki**
**Tokyo 103-8383 (JP)**
• **KAMABAYASHI, Jun**
**Tokyo 103-8383 (JP)**
• **KANO, Katsuhiko**
**Tokyo 103-8383 (JP)**
• **KUME, Kosuke**
**Tokyo 103-8383 (JP)**
• **MIYAZAKI, Chikako**
**Tokyo 103-8383 (JP)**
• **FUKAI, Takuya**
**Tokyo 103-8383 (JP)**

(74) Representative: **Wächtershäuser & Hartz
Patentanwaltspartnerschaft mbB
Weinstraße 8
80333 München (DE)**

(54) **PIGMENT DISPERSION**

(57) There is provided a pigment dispersion in which a pigment is finely dispersed at a high level, the pigment dispersion making it possible to prepare an aqueous inkjet ink that can record an image having excellent color developability, rub resistance, alcohol resistance, and adhesion to nonabsorbent substrates and that has excellent ejection stability and redispersibility. The pigment dispersion is a pigment dispersion to be used for preparing an aqueous inkjet ink. The dispersant for the pigment is an A-B block copolymer containing a polymer chain A and a polymer chain B, the A-B block copolymer having a number average molecular weight of 5,000 to 15,000, a polydispersity index (weight average molecular weight/number average molecular weight) of 1,2 to 1.6, and an acid number of 100 mgKOH/g or higher. In the A-B block copolymer, 30 to 70 mol% of carboxy groups derived from methacrylic acid are neutralized with ammonia, and 30 to 70 mol% of the carboxy groups derived from methacrylic acid are neutralized with at least any one of sodium hydroxide and potassium hydroxide.

EP 4 650 405 A1

## Description

## Technical Field

The present invention relates to a pigment dispersion.

## Background Art

Printers and printing machines equipped with aqueous inkjet inks have been used in a wide variety of applications such as personal use, office use, business use, recording use, color display use, and color photographic use due to their high functionalization and have been studied especially as high-speed printing machines for industrial use. In order to cope with demands for high-speed printing and high image quality, micronization of ink droplets ejected from a head is advancing. To micronize ink droplets ejected from a head, it is necessary to further micronize a pigment in an ink and disperse the particles of the micronized pigment finely in a dispersion medium.

The use of an ink containing a micronized pigment makes it possible to print an object to be printed, such as an image, having improved vividness, color density, and the like, and, among others, having improved chroma, which is an index of "purity of color." In addition, when printing is performed with the ink containing a micronized pigment on processed paper (such as photographic paper and wide-format paper) for inkjet recording, the gloss value of an image to be printed is improved. However, the ink containing a micronized pigment is likely to penetrate into paper, and therefore the color developability of the image tends to deteriorate.

In addition, with high-speed printing, the ejection stability of the ink tends to be regarded as important. Furthermore, when printing is temporarily stopped, the ink dries in the head, which may cause an ejection failure. Therefore, the ink is also required to have good redispersibility such that the dried ink easily dissolves in the ink to be ejected next or cleaning liquid and the dispersed state of the pigment returns to the original state.

On the other hand, in the industrial field, printing may also be performed on a nonabsorbent recording media (substrate) such as a plastic film. In order to print an image having excellent adhesion, wet rub resistance, dry rub resistance, and alcohol resistance (alcohol rub resistance) on a nonabsorbent substrate, an ink that can form a coating film having good durability such that the coating film is hard to dissolve in various liquids is needed. Specifically, an ink is required to have conflicting properties such as redissolvability (redispersibility) such that even if the ink dries, the ink returns quickly to the original state and durability such that the ink can form a coating film having a satisfactory durability that makes the coating film hard to dissolve in various liquids.

Aqueous inkjet inks express basic colors using four colors of black, yellow, magenta, and cyan. In order to expand the color gamut, colors such as orange, green, and red may be used, and in order to express satisfactory white on paper and films, a white pigment such as a titanium dioxide pigment may also be used. However, the titanium dioxide pigment is an inorganic compound and therefore has a large specific gravity and is likely to cause sedimentation during long-term storage. Furthermore, the titanium dioxide pigment may form a hard cake depending on the storage conditions, which may impair the functions of the ink. When the pigment in the ink causes sedimentation, it is necessary to return the dispersed state of the pigment to the original state by stirring the ink. However, once the settled pigments form a hard cake, it is generally difficult to redisperse the pigment even if the ink is stirred.

In order to enhance the durability of an image to be recorded and to improve the dispersibility of a pigment, there have been disclosed various inkjet inks and the like in which the composition of a resin and a surfactant to be blended is devised (Patent Literatures 1 to 5).

## Citation List

## Patent Literature

Patent Literature 1: Japanese Patent No. 5403313
Patent Literature 2: Japanese Patent Laid-Open No. 2008-45023
Patent Literature 3: Japanese Patent No. 4157868
Patent Literature 4: Japanese Translation of PCT International Application Publication No. 2009-515007
Patent Literature 5: International Publication No. WO 2013/008691

## Summary of Invention

## Technical Problem

However, it is difficult to record an image having excellent color developability, rub resistance, alcohol resistance, and adhesion to nonabsorbent substrates even with the inks and the like disclosed in Patent Literatures 1 to 5. Furthermore, even the above inks and the like are not necessarily superior in terms of ejection stability and redispersibility, and therefore there is room for improvements.

The present invention has been completed in view of such problems of the conventional techniques, and an object of the present invention is to provide a pigment dispersion in which a pigment is finely dispersed at a high level, the pigment dispersion making it possible to prepare an aqueous inkjet ink that can record an image having excellent color developability, rub resistance, alcohol resistance, and adhesion to nonabsorbent substrates and that has excellent ejection stability and redispersibility.

## Solution to Problem

Specifically, according to the present invention, a pigment dispersion described below is provided.

[1] A pigment dispersion to be used for preparing an aqueous inkjet ink, the pigment dispersion containing:

a pigment;
a dispersant;
a water-soluble organic solvent; and
water, wherein
the dispersant is an A-B block copolymer containing: a polymer chain A; and a polymer chain B, the A-B block copolymer having a number average molecular weight of 5,000 to 15,000, a polydispersity index (weight average molecular weight/number average molecular weight) of 1.2 to 1.6, and an acid value of 100 mgKOH/g or higher, the polymer chain A is a polymer block containing: at least one constituent unit (A-1) selected from the group consisting of methyl methacrylate and benzyl methacrylate; and at least one constituent unit (A-2) selected from the group consisting of cyclohexyl methacrylate, dicyclopentanyl methacrylate, and isobornyl methacrylate, provided that the total content of the constituent unit (A-1) and the constituent unit (A-2) is 70% by mass or more, the polymer block having a glass transition temperature of 50°C or higher, a number average molecular weight of 2,000 to 10,000, and a polydispersity index of 1.1 to 1.5,
the polymer chain B is a polymer block containing: a constituent unit (B-1) derived from methacrylic acid; and a constituent unit (B-2) derived from at least one selected from the group consisting of methyl methacrylate, benzyl methacrylate, and cyclohexyl methacrylate, provided that the content of the constituent unit (B-1) is 25 to 50% by mass, the polymer block having a number average molecular weight of 2,000 to 10,000, and
in the A-B block copolymer, 30 to 70 mol% of carboxy groups derived from methacrylic acid are neutralized with ammonia, and 30 to 70 mol% of the carboxy groups derived from methacrylic acid are neutralized with at least any one of sodium hydroxide and potassium hydroxide.

[2] The pigment dispersion according to [1], wherein in the A-B block copolymer, 40 to 60 mol% of the carboxy groups derived from methacrylic acid are neutralized with ammonia, and 40 to 60 mol% of the carboxy groups derived from methacrylic acid are neutralized with sodium hydroxide.

[3] The pigment dispersion according to [1] or [2], wherein

the content of the pigment is 5 to 60% by mass,
the content of the dispersant is 0.5 to 20% by mass,
the content of the water-soluble organic solvent is 30% by mass or less, and
the content of water is 20 to 80% by mass.

[4] The pigment dispersion according to any one of [1] to [3], wherein the water-soluble organic solvent is at least one selected from the group consisting of diethylene glycol monobutyl ether, triethylene glycol monobutyl ether, tetraethylene glycol monobutyl ether, propylene glycol monomethyl ether, propylene glycol monopropyl ether, dipropylene glycol monomethyl ether, tripropylene glycol monomethyl ether, 3-methoxy-N,N-dimethylpropanamide, and 3-butoxy-N,N-dimethylpropanamide.

[5] The pigment dispersion according to any one of [1] to [4], wherein

the pigment is at least one selected from the group consisting of a yellow pigment, a red pigment, a blue pigment, a green pigment, an orange pigment, a black pigment, and a white pigment,

the yellow pigment is at least one selected from the group consisting of C.I. Pigment Yellow 74, 150, 155, and 180,
the red pigment is at least one selected from the group consisting of C.I. Pigment Red 122, 202, 254, and 269, and solid solutions thereof, and C.I. Pigment Violet 19 and 23, and solid solutions thereof,
the blue pigment is at least one selected from the group consisting of C.I. Pigment Blue 15:3, 15:4, and 15:6,
the green pigment is at least one selected from the group consisting of C.I. Pigment Green 7, 36, and 58,
the orange pigment is C.I. Pigment Orange 43,
the black pigment is C.I. Pigment Black 7, and
the white pigment is C.I. Pigment White 6.

**Advantageous Effects of Invention**

The present invention can provide a pigment dispersion in which a pigment is finely dispersed at a high level, the pigment dispersion making it possible to prepare an aqueous inkjet ink that can record an image having excellent color developability, rub resistance, alcohol resistance, and adhesion to nonabsorbent substrates and that has excellent ejection stability and redispersibility.

**Description of Embodiments**

<Pigment Dispersion>

Hereinafter, embodiments of the present invention will be described, but the present invention is not limited to the following embodiments. One embodiment of a pigment dispersion of the present invention is a pigment dispersion that is used for preparing an aqueous inkjet ink and that contains a pigment, a dispersant, a water-soluble organic solvent, and water. Hereinafter, details on the pigment dispersion of the present embodiment will be described.

(Pigment)

The pigment dispersion of the present embodiment contains a pigment in a finely dispersed state. As the pigment, conventionally known organic pigments and inorganic pigments that are used for aqueous inkjet inks can be used. Examples of the organic pigments include color pigments such as phthalocyanine-based, azo-based, azomethineazo-based, azomethine-based, anthraquinone-based, perinone/perylene-based, indigo/thioindigo-based, dioxazine-based, quinacridone-based, isoindoline-based, isoindolinone-based, diketopyrrolopyrrole-based, quinophthalone-based, and indanthrene-based pigments; and carbon black pigments such as furnace black, lampblack, acetylene black, and channel black. Examples of the inorganic pigments include extender pigments, titanium oxide-based pigments, iron oxide-based pigments, and spinel pigments.
Specific examples of the pigment, expressed by Color Index (C.I.) numbers, include: C.I. Pigment Yellow 12, 13, 14, 17, 20, 24, 74, 83, 86, 93, 94, 95, 97, 109, 110, 117, 120, 125, 128, 129, 137, 138, 139, 147, 148, 150, 151, 153, 154, 155, 166, 168, 175, 180, 181, 185, and 191; C.I. Pigment Red 4, 5, 9, 23, 48, 49, 52, 53, 57, 97, 112, 122, 123, 144, 146, 147, 149, 150, 166, 168, 170, 176, 177, 180, 184, 185, 192, 202, 207, 214, 215, 216, 217, 220, 221, 223, 224, 226, 227, 228, 238, 240, 242, 254, 255, 264, 269, and 272, and solid solutions containing C.I. Pigment Red 122; C.I. Pigment Violet 19, 23, 29, 30, 37, 40, and 50; C.I. Pigment blue 15, 15:1, 15:3, 15:4, 15:6, 22, 60, and 64; C.I. Pigment Green 7, 36, and 58; C.I. Pigment Orange 1, 2, 5, 7, 13, 14, 15, 16, 24, 34, 36, 38, 40, 43, and 63; C.I. Pigment Black 7; and C.I. Pigment White 6.
Among others, the pigment is preferably at least one selected from the group consisting of a yellow pigment, a red pigment, a blue pigment, a green pigment, an orange pigment, a black pigment, and a white pigment from the viewpoint of color developability, dispersibility, weatherability, and the like. The yellow pigment is preferably at least one selected from the group consisting of C.I. Pigment Yellow 74, 150, 155, and 180. The red pigment is preferably at least one selected from the group consisting of C.I. Pigment Red 122, 202, 254, and 269, and solid solutions thereof, and C.I. Pigment Violet 19 and 23, and solid solutions thereof. The blue pigment is preferably at least one selected from the group consisting of C.I. Pigment Blue 15:3, 15:4, and 15:6. The green pigment is preferably at least one selected from the group consisting of C.I. Pigment Green 7, 36, and 58. The orange pigment is preferably C.I. Pigment Orange 43. The black pigment is preferably C.I. Pigment Black 7. The white pigment is preferably C.I. Pigment White 6.
A microparticle organic pigment is preferably used, except when hiding power is required for printed matter (image). When high-definition printed matter exhibiting transparency is needed, a pigment micronized by wet pulverization or dry pulverization such as salt milling is preferably used. When avoidance of nozzle clogging, or the like is taken into consideration, an organic pigment having a number average particle size of 0.2 $\mu$m or smaller, and an inorganic pigment having a number average particle size of 0.4 $\mu$m or smaller, from which pigments having a particle size of larger than 1.0 $\mu$m are removed, is preferably used. The use of the pigments having a number average particle size within the above ranges makes it possible to improve the optical density, chroma, color developability, and print quality of printed matter to be recorded and suppress the sedimentation of the pigment in an ink moderately. The number average particle size of the pigment can be measured using, for example, an electron microscope, a light scattering particle size analyzer, or the like.

The pigment may be any of an untreated pigment; a self-dispersible pigment with a functional group introduced to the surface thereof; and a treated pigment whose surface is treated or encapsulated with a surface treatment agent such as a coupling agent or surfactant, a polymer, or the like. In addition, the pigment may be treated with a dispersant. For example, when the pigment is synthesized, when pigmentation is performed, or when the pigment is micronized, a dispersant may be allowed to coexist. After the dispersant and the pigment are mixed and stirred in water for dispersion, the pigment may be treated by deposition in a poor solvent or deposition using an acid.

(Dispersant)

The dispersant is a component for dispersing the pigment in the liquid medium containing a water-soluble organic solvent and water and is an A-B block copolymer containing: a polymer chain A; and a polymer chain B, the A-B block copolymer having a number average molecular weight of 5,000 to 15,000, a polydispersity index (weight average molecular weight/number average molecular weight) of 1.2 to 1.6, and an acid value of 100 mgKOH/g or higher.

The dispersant is an A-B block copolymer containing a polymer chain A (hereinafter, also referred to as "chain A") and a polymer chain B (also referred to as "chain B"). The chain A is a water-insoluble polymer block. The chain B is a water-soluble polymer block whose carboxy groups derived from methacrylic acid are neutralized with an alkali, the water-soluble polymer block containing a constituent unit (B-1) derived from methacrylic acid. The chain A is a water-insoluble polymer block and therefore highly hydrophobic and is adsorbed onto a hydrophobic pigment. Since the chain A is a water-insoluble polymer block, the A-B block copolymer (dispersant) is unlikely to be desorbed from the pigment onto which it is adsorbed over a long period of time, so that the fine dispersion state of the pigment can be retained. In addition, even when an ink containing the pigment and the A-B block copolymer is ejected by an inkjet system, the ejection stability is satisfactory because the chain A is unlikely to be desorbed from the pigment. The chain B is a water-soluble polymer block. This chain B makes it possible to suppress the aggregation of the pigment.

The polymer chain A (chain A) is a polymer block containing: at least one constituent unit (A-1) selected from the group consisting of methyl methacrylate and benzyl methacrylate; and at least one constituent unit (A-2) selected from the group consisting of cyclohexyl methacrylate, dicyclopentanyl methacrylate, and isobornyl methacrylate.

In the chain A, the total content of the constituent unit (A-1) and the constituent unit (A-2) is 70% by mass or more, preferably 80% by mass or more, more preferably 95% by mass or more. The chain A is a highly hydrophobic polymer block having an aromatic ring and a cycloalkyl ring and therefore adsorbed onto the pigment efficiently.

The glass transition temperature (Tg) of the chain A is 50°C or higher, preferably 55 to 155°C. That is, the chain A has a high glass transition temperature and therefore is a relatively hard polymer block. The glass transition temperature (Tg) of the chain A can be measured by thermal analysis. The glass transition temperature (Tg) of the chain A can also be determined simply by calculation. Specifically, the glass transition temperature (°C) of a polymer obtained by copolymerizing monomers consisting of x components is assumed to be "T," the composition ratios (mass ratios) of respective monomers are assumed to be "$W_1$, $W_2$, and the glass transition temperatures (°C) of homopolymers of respective monomers are assumed to be "$T_1$, $T_2$, ... ." In this case, the glass transition temperature (Tg(°C)) of this polymer can be calculated by the following formula (1).

$$1/T = \{W_1/(T_1+273)\} + \{W_2/(T_2+273)\} + \cdots \quad \cdots \quad (1)$$

As the glass transition temperature of the homopolymer of each monomer, a value obtained from the web site "https://polymer.nims.go.jp/" can be used. For example, Tg of the homopolymer of methyl methacrylate is 105°C, Tg of the homopolymer of benzyl methacrylate is 54°C, Tg of the homopolymer of cyclohexyl methacrylate is 83°C, Tg of the homopolymer of dicyclopentanyl methacrylate is 120°C, and Tg of the homopolymer of isobornyl methacrylate is 110°C.

The number average molecular weight (Mn) of the chain A is 2,000 to 10,000, preferably 3,000 to 7,000. When Mn of the chain A is lower than 2,000, the chain A is likely to be desorbed from the pigment. On the other hand, when Mn of the chain A is higher than 10,000, the chain A forms a particle in an aqueous liquid medium, and therefore it may happen that the chain A cannot be absorbed onto the pigment. By setting Mn within the above range, the chain A that dissolves or is swollen in an aqueous liquid medium is efficiently adsorbed onto the pigment. Each of the number average molecular weight (Mn) and the weight average molecular weight (Mw) herein is a value in terms of polystyrene, as measured by gel permeation chromatography (GPC).

The polydispersity index (PDI = weight average molecular weight/number average molecular weight) of the chain A is 1.1 to 1.5, preferably 1.2 to 1.45. In other words, the chain A is a polymer block having a relatively uniform molecular weights. It is preferred to make the molecular weights of the polymer uniform because thereby high-molecular-weight polymers and low-molecular-weight polymers decrease, and a large number of polymer chains that contribute to the dispersibility of the pigment are contained.

If necessary, the chain A may further contain an additional constituent unit other than the constituent unit (A-1) and the constituent unit (A-2). Examples of monomers for forming the additional constituent unit include: styrene; (meth) acrylates having an alkyl group or an alkenyl group, such as methyl (meth)acrylate, butyl (meth)acrylate, t-butyl (meth) acrylate, hexyl (meth)acrylate, 2-ethylhexyl (meth)acrylate, and lauryl (meth)acrylate; hydroxy group-containing (meth) acrylates, such as 2-hydroxyethyl (meth)acrylate, 2-hydroxypropyl (meth)acrylate, and 3-hydroxypropyl (meth)acrylate; glycol ether-based (meth)acrylates, such as (poly)ethylene glycol monomethyl ether (meth)acrylate, (poly)ethylene glycol monoethyl ether (meth)acrylate, and (poly)propylene glycol monomethyl ether (meth)acrylate; and amino group-containing (meth)acrylates, such as dimethylaminoethyl (meth)acrylate, diethylaminoethyl (meth)acrylate, and t-butylaminoethyl (meth)acrylate.

The polymer chain B (chain B) is a polymer block containing: a constituent unit (B-1) derived from methacrylic acid; and a constituent unit (B-2) derived from at least one selected from the group consisting of methyl methacrylate, benzyl methacrylate, and cyclohexyl methacrylate. The chain B is a polymer block in which the content of the constituent unit (B-1) is 25 to 50% by mass, preferably 26 to 40% by mass, the polymer block having a high acid value.

The chain B has a high acid value and therefore is a polymer block that dissolves in water by neutralization. In addition, the carboxy groups form hydrogen bonds with the surface of a nonabsorbent substrate such as a plastic film, and therefore the adhesion of a printed film to the nonabsorbent substrate can be enhanced. Furthermore, the carboxy groups are neutralized, and therefore the hydration property is high. For this reason, even when a pigment such as titanium oxide causes sedimentation, the aggregation of the pigment can be suppressed, and the original dispersion state can be returned by only stirring. When the content of the constituent unit (B-1) is less than 25% by mass, the redispersibility and the adhesion of a printed film deteriorate although the A-B block copolymer dissolves in water. On the other hand, when the content of the constituent unit (B-1) is more than 50% by mass, the polymerizability deteriorates, and the number of sites where hydration occur increases, which may result in in an excessive increase in the viscosity of the pigment dispersion.

The chain B is a polymer block containing a constituent unit (B-2) derived from at least one selected from the group consisting of methyl methacrylate, benzyl methacrylate, and cyclohexyl methacrylate. Containing this constituent unit (B-2), the chain B as well as the chain A has a high glass transition temperature (Tg) and can contribute to the adhesion to substrates and the rub resistance.

If the constituent unit (B-2) is a constituent unit derived only from cyclohexyl methacrylate, the hydrophobicity of the cyclohexyl group is high, and therefore the A-B block copolymer may be hard to dissolve in water even by neutralization even when the A-B block copolymer contains a large amount of the constituent unit (B-1). For this reason, the constituent unit (B-2) is preferably a constituent unit derived from at least any one of methyl methacrylate and benzyl methacrylate; or a constituent unit derived from cyclohexyl methacrylate and at least any one of methyl methacrylate and benzyl methacrylate. Note that when benzyl methacrylate is used, the adhesion to a nonabsorbent substrate such as a PET film can be further improved because benzyl methacrylate has an aromatic ring.

The number average molecular weight (Mn) of the chain B is 2,000 to 10,000, preferably 3,000 to 7,000. When Mn of the chain B is lower than 2,000, the molecular weight is too low, which makes it difficult to dissolve and disperse the chain A in water. On the other hand, when Mn of the chain B is higher than 10,000, the molecular weight is too high, which may increase the viscosity of the pigment dispersion excessively.

The number average molecular weight (Mn) of the A-B block copolymer (dispersant) is 5,000 to 15,000, preferably 6,000 to 13,000. When Mn of the A-B block copolymer is lower than 5,000, the molecular weight of either the chain A or the chain B may be extremely low, and the dispersion stability may deteriorate. On the other hand, when Mn of the A-B block copolymer is higher than 15,000, the molecular weight of either the chain A or the chain B may be extremely high, and therefore it may happen that the performance of each polymer block cannot be exhibited sufficiently.

The polydispersity index (PDI = weight average molecular weight/number average molecular weight) of the A-B block copolymer is 1.2 to 1.6, preferably 1.3 to 1.5. When the polydispersity index is out of the above range, the A-B block copolymer whose polydispersity index is out of the range in terms of molecular weight is contained in a large amount, and therefore it may happen that desired performances cannot be exhibited.

The acid value of the A-B block copolymer is 100 mgKOH/g or higher, preferably 105 to 150 mgKOH/g. When the acid value of the A-B block copolymer is lower than 100 mgKOH/g, the water-soluble sites decrease, so that it may happen that the redispersibility cannot be exhibited.

In the A-B block copolymer, 30 to 70 mol% of carboxy groups derived from methacrylic acid are neutralized with ammonia, and 30 to 70 mol% of the carboxy groups derived from methacrylic acid are neutralized with at least any one of sodium hydroxide and potassium hydroxide. In other words, the A-B block copolymer is ionized as a result of being neutralized with an alkali that is volatile and an alkali that is left as a neutralized salt. Some parts of the carboxy groups are neutralized with ammonia that is a volatile alkali. When printed matter (image) is made (recorded) using an ink prepared with the pigment dispersion containing this A-B block copolymer as a dispersant, the ammonia volatilizes to produce carboxy groups. In other words, the ionized carboxy groups become water-insoluble carboxy groups, which makes the coating film as the image water-insoluble. In addition, hydrophobic groups such as aromatic rings and cycloalkyl groups are present in the A-B block copolymer, and therefore the rub resistance and alcohol resistance of the image are improved.

Furthermore, ammonia volatilizes, but the sodium salts and the potassium salts exist as they are after recording. Specifically, when an ink dries in an inkjet recording head, ammonia volatilizes, but the sodium salts and the potassium salts are present as they are. Even when an ink dries in a recording head, a water-soluble organic solvent whose boiling point is equal to or higher than a predetermined temperature is left. When the sodium salts and potassium salts of the carboxy groups and the water-soluble organic solvent are present, thereby dried matter of the ink easily redissolves (redisperses) in the ink to be ejected next or cleaning liquid, which suppresses clogging of the recording head caused by drying. The water-soluble organic solvent almost volatilizes after printing due to drying, and as a result, the sodium salts and the potassium salts, which are soluble in water, are present. However, the hydrophobic groups such as aromatic rings and cycloalkyl groups are present in the A-B block copolymer, and therefore the rub resistance and alcohol resistance of an image is retained at a high level.

When less than 30 mol% of the carboxy groups derived from methacrylic acid in the A-B block copolymer are neutralized with ammonia, the proportion of the carboxy groups neutralized with sodium hydroxide and potassium hydroxide increases relatively, so that the rub resistance of printed matter deteriorates. On the other hand, when more than 70 mol% of the carboxy groups derived from methacrylic acid in the A-B block copolymer are neutralized with ammonia, the redissolvability (redispersibility) of an ink is insufficient. It is preferred that in the A-B block copolymer, 40 to 60 mol% of the carboxy groups derived from methacrylic acid be neutralized with ammonia and 40 to 60 mol% of the carboxy groups derived from methacrylic acid are neutralized with sodium hydroxide.

The dispersant (A-B block copolymer) can be produced according to a conventionally known method. The dispersant (A-B block copolymer) is preferably produced by a living polymerization method, such as, for example, a living anionic polymerization method, a living cationic polymerization method, and a living radical polymerization method. Among others, a living radical polymerization method is preferred from the viewpoint of conditions, materials, apparatuses, and the like. Particularly, an RTCP method and an RCMP method using an organic compound as a catalyst and using an organic iodine compound as a polymerization initiator are preferred. These methods are advantageous in terms of costs and purification because commercially available compounds that are relatively safe are used, and heavy metals and special compounds are not used. Furthermore, when tertiary iodine is used as growth terminals, thereby a block structure with good precision can be easily formed using general facilities.

Any of the polymer blocks of the chain A and the chain B may be first formed by polymerization. The chain B is preferably formed by polymerization after the chain A is formed by polymerization. In the case where chain B is first formed by polymerization, if the polymerization rate is less than 100%, the constituent unit derived from a residual monomer may be introduced into the chain A that is formed later by polymerization. In this case, a large amount of methacrylic acid that is a constituent of the chain B is introduced into the chain A, and therefore there is a possibility that the chain A easily dissolves in water.

Solution polymerization in an organic solvent is preferably performed to produce the A-B block copolymer, and the solution polymerization is more preferably performed in an organic solvent that is the same as the water-soluble organic solvent to be blended in the pigment dispersion. After the polymerization, ammonia water, an aqueous sodium hydroxide solution, an aqueous potassium hydroxide solution, and the like are added to neutralize the carboxy groups and make an aqueous solution, and thereby a solution of the A-B block copolymer can be obtained. A solution of the A-B block copolymer can also be obtained as follows: after the polymerization is performed in an organic solvent, the polymerization solution is added to a poor solvent to precipitate a polymer; the precipitated polymer is dispersed in water or a water-soluble organic solvent; and then ammonia water, an aqueous sodium hydroxide solution, an aqueous potassium hydroxide solution, and the like are added thereto to neutralize the carboxy groups and make an aqueous solution.

(Dispersion Medium)

The pigment dispersion of the present embodiment contains a liquid medium containing water and a water-soluble organic solvent as a dispersion medium for the pigment. As the water, ion-exchanged water, distilled water, purified water, and the like are preferably used.

The water-soluble organic solvent functions not only as a humectant but also as a dryness preventing agent and has an action of improving wettability to plastic films. Examples of the water-soluble organic solvent include: alcohol-based solvents, such as methanol, ethanol and isopropanol; ketone-based solvents, such as acetone; alkylene glycol-based solvents, such as ethylene glycol, diethylene glycol, propylene glycol, dipropylene glycol, 3-methoxy-3-methyl-1-butanol, and 1,2-hexanediol; alkylene glycol monoalkyl ether-based solvents, such as ethylene glycol methyl ether, diethylene glycol monobutyl ether, propylene glycol monomethyl ether, propylene glycol monopropyl ether, dipropylene glycol monomethyl ether, and tripropylene glycol monomethyl ether; glycerol-based solvents, such as glycerol, diglycerol, ethylene oxide adducts of glycerol; amide-based solvents, such as 2-pyrrolidone, N-methylpyrrolidone, 3-methoxy-N,N-dimethylpropionamide, and 3-butoxy-N,N-dimethylpropionamide; urea-based solvents, such as tetramethylurea and dimethyl imidazolidinone; and carbonate-based solvents, such as ethylene carbonate and dimethyl carbonate.

From the viewpoint of humidity maintenance, dryness prevention, and the like, the water-soluble organic solvent is preferably at least one selected from the group consisting of diethylene glycol monobutyl ether, triethylene glycol monobutyl ether, tetraethylene glycol monobutyl ether, propylene glycol monomethyl ether, propylene glycol monopropyl ether, dipropylene glycol monomethyl ether, tripropylene glycol monomethyl ether, 3-methoxy-N,N-dimethylpropanamide, and 3-butoxy-N,N-dimethylpropanamide.

The dispersant is preferably produced by solution polymerization in which a water-soluble organic solvent to be contained in the pigment dispersion or an aqueous inkjet ink is used. The use of the water-soluble organic solvents as a polymerization solvent makes it possible to prepare the pigment dispersion using a polymer solution to be obtained by polymerization as it is and therefore makes it possible to simplify the processes.

(Other additives)

Other additives can be contained as necessary in the pigment dispersion of the present embodiment. Examples of other additives include a surfactant, an antiseptic, an organic solvent other than the water-soluble organic solvents described above, a levelling agent, a surface tension adjuster, a pH adjuster, an ultraviolet absorber, a light stabilizer, an antioxidant, a dye, a filler, a wax, a thickener, a defoamer, a fungicide, an antistatic agent, a fine metal particle, and a magnetic powder.

When a surfactant is contained in the pigment dispersion, thereby the surface tension of the pigment dispersion or an ink can be maintained in a predetermined range. The surface tension of the ink at 25°C is preferably 15 to 45 mN/m, more preferably 20 to 40 mN/m. Examples of the surfactant include silicone-based, acetylene glycol-based, fluorine-based, alkylene oxide-based, and hydrocarbon-based surfactants. Among others, silicone-based, acetylene glycol-based, and fluorine-based surfactants are preferred. Generally, a surfactant may cause foaming of an ink or repelling of an ink on the surface of a film. Therefore, it is preferred to control the amount of the surfactant to be added to the pigment dispersion appropriately.

Examples of the antiseptic include sodium benzoate, benzimidazole, thiabendazole, potassium sorbate, sodium sorbate, sodium dehydroacetate, thiazosulfamide, and pyridine thiol oxide.

(Pigment Dispersion)

The content of the pigment in the pigment dispersion is preferably 5 to 60% by mass. When the pigment is an organic pigment, the content of the organic pigment in the pigment dispersion is preferably 5 to 30% by mass, more preferably 10 to 25% by mass. When the pigment is an inorganic pigment, the content of the inorganic pigment in the pigment dispersion is preferably 20 to 60% by mass, more preferably 30 to 50% by mass.

The content of the dispersant in the pigment dispersion is preferably 0.5 to 20% by mass. When the content of the pigment dispersant is less than 0.5% by mass, it is difficult to disperse the pigment stably. On the other hand, when the content of the pigment dispersant is more than 20% by mass, the viscosity may be too high, and an ink shows non-Newtonian viscosity, and therefore it may happen that the ink cannot be ejected linearly by an inkjet system.

The content of the dispersant is preferably set according to the type, surface characteristics, particle size, and the like of the pigment. Specifically, the amount of the pigment dispersant is preferably set to 5 to 50 parts by mass, more preferably 10 to 30 parts by mass, based on 100 parts by mass of an organic pigment. In addition, the amount of the pigment dispersant is preferably set to 1 to 20 parts by mass, more preferably 3 to 10 parts by mass, based on 100 parts by mass of an inorganic pigment.

The content of the water-soluble organic solvent in the pigment dispersion is preferably 30% by mass or less, more preferably 0.5 to 20% by mass. When the content of the water-soluble organic solvent is more than 30% by mass, the water-soluble organic solvent is liable to be left in a printed film, and therefore blocking may be liable to occur, and physical properties such as water resistance and rub resistance of an image may deteriorate. In addition, the viscosity of the pigment dispersion may increase, and the dispersant may be desorbed from the pigment to cause aggregation.

The content of water in the pigment dispersion is preferably 20 to 80% by mass. When an aqueous pigment dispersion contains an appropriate amount of water is produced, thereby an aqueous inkjet ink can be easily prepared.

When the content of a surfactant in the pigment dispersion is too high, the pigment may be liable to cause aggregation. Therefore, it is preferred to control the content of a surfactant appropriately. The content of a surfactant in the pigment dispersion is preferably 0 to 3.5% by mass, more preferably 0.01 to 2% by mass. In addition, the content of an antiseptic in the pigment dispersion is preferably 0.05 to 2% by mass, more preferably 0.1 to 1% by mass.

The pigment dispersion can be produced according to a conventionally known method. For example, the pigment, the dispersant, water, the water-soluble organic solvent are mixed, and a resulting mixture is stirred and dispersed to obtain a preliminary pigment dispersion. When mixing, stirring, and dispersion are performed, conventionally known mixer, stirrer, and disperser can be used. Examples of the stirrer include a dissolver and a homogenizer. Examples of the mixer and disperser include a kneader, an attritor, a ball mill, a vertical media disperser and a horizontal media disperser loaded with glass beads or zirconia beads, a colloid mill, a jet mill, a high-pressure homogenizer, and an ultrasonic disperser. As the media to be loaded in the media disperser, beads having a size of 1 mm or smaller are preferably used. The use of such beads as the media makes it possible to perform so-called soft dispersion during which the crystals and shapes of the pigment are unlikely to be broken.

The pigment is preferably dispersed into primary particles by the above-described mixing, stirring, and dispersion. However, the pigment may form aggregates whose particle sizes are as needed. The dispersion state of the pigment can be checked by a conventionally known method. For example, the dispersion state of the pigment can be checked by use of an optical microscope or an electron microscope, by measurement with a particle size analyzer such as a light-scattering particle size analyzer, and by measurement of the absorbance using a spectrophotometer. After the dispersion, coarse particles may be removed by centrifugal filtration, filtration with a filter, or the like. Thereafter, other additives are added as necessary, and thus the pigment dispersion can be obtained.

The physical properties of the pigment dispersion are appropriately designed so as to match the physical properties of an aqueous inkjet ink to be prepared. The viscosity of the aqueous inkjet ink is adjusted according to the type and the like of the pigment to an appropriate viscosity that enables ejection from the nozzles of recording heads by inkjet systems. For example, the viscosity of an ink containing an organic pigment at 25°C is preferably 2 to 10 mPa·s. The viscosity of an ink containing an inorganic pigment at 25°C is preferably 5 to 30 mPa·s.

The pH of the pigment dispersion at 25°C is preferably 7.0 to 10.0, more preferably 7.5 to 9.5. When the pH of the pigment dispersion is lower than 7.0, the dispersant may be liable to precipitate, and the pigment may be liable to form aggregates. On the other hand, when the pH of the pigment dispersion is higher than 10.0, the alkalinity is strong, which may make the handleability difficult. In addition, the surface tension of the pigment dispersion at 25°C is preferably 15 to 45 mN/m, more preferably 20 to 40 mN/m.

The pigment dispersion of the present embodiment is useful as a pigment dispersion to be blended in an aqueous inkjet ink. The inkjet ink can be applied to inkjet printers for consumer use, industrial use, textile printing use, and the like. Examples of media (recording media) to be an object of printing include plain paper, glossy paper, matte paper, films formed of vinyl chloride or a polyester such as PET, fibers such as cotton and polyesters, and metals such as an aluminum plate. The use of an ink prepared using the pigment dispersion of the present embodiment makes it possible to perform high-speed recording of an image having excellent color developability even on paper containing a large amount of an inorganic filler. In addition, the ink prepared using the pigment dispersion of the present embodiment is suitable for high-speed printing and therefore is suitable for inkjet printers for industrial label printing, packaging printing, and wide format printing.

**Examples**

Hereinafter, the present invention will be described specifically based on Examples, but the present invention is not limited to these Examples. Note that "part(s)" and "%" in Examples and Comparative Examples are on a mass basis unless otherwise noted.

<Production of Pigment Dispersion>

(Production Example 1)

In a reaction container, 290.5 parts of diethylene glycol monobutyl ether (BDG), 290.5 parts of propylene glycol monomethyl ether (MPG), 5.4 parts of iodine, 20.1 parts of 2,2'-azobis(4-methoxy-2,4-dimethylvaleronitrile) (V-70, manufactured by FUJIFILM Wako Pure Chemical Corporation), 110.0 parts of benzyl methacrylate (BzMA), 132.0 parts of cyclohexyl methacrylate (CHMA), and 0.43 parts of N-iodosuccinimide (NIS) were placed. The resulting mixture was heated to 40°C under a nitrogen stream and stirred to perform polymerization for 4 hours, and thus a chain A (polymer) was formed. Part of the resulting solution was sampled to find that the conversion of the polymerization was 99.2%, which was calculated from the nonvolatile component obtained by heating the sampled solution to 180°C where the weight thereof became constant. In addition, the sampled solution was dissolved in acetone and analyzed by gas chromatography to find that the monomers were hardly detected. The molecular weight of the polymer was measured by gel permeation chromatography (GPC) using a 0.1 mmol/L dimethyl formamide solvent as a developing solvent. As a result, the number average molecular weight (Mn) in terms of polystyrene and polydispersity index (PDI = weight average molecular weight (Mw)/number average molecular weight (Mn)) of the polymer were 5,000 and 1.20 respectively.

Part of the sampled solution was added to a large amount of hexane, and the resulting mixture was stirred well to obtain a white precipitate. The precipitate obtained was dried under a reduced pressure to distil away the residual solvent. The glass transition temperature (Tg) of the precipitate (polymer), measured by thermal analysis, was 68.6°C. It was ascertained that Tg (calculated value) of the polymer (chain A), calculated from the formula (1) above, was 69.2°C, which was almost the same as the measured value.

To the above polymerization solution, 187.9 parts of BzMA and 125.2 parts of methacrylic acid (MAA) were added to perform polymerization for 3 hours, and thus a chain B was formed to obtain an A-B block copolymer. In the chain B, the content (MMA content) of the constituent unit derived from MAA (constituent unit (B-1)) was 40%. The solid content measured by sampling part of the reaction solution was 48.6%, and the polymerization rate calculated from the solid content was about 100%. Mn and PDI of the A-B block copolymer were 10,700 and 1.31 respectively. Mn of the chain B ("Mn of A-B block copolymer" - "Mn of chain A") was 5,700.

In a conical beaker, 0.5 parts of the sampled reaction solution was placed, and 40 mL of toluene/ethanol =1/1 (mass ratio) were added thereto to dissolve the sampled reaction solution, and then phenolphthalein was added thereto. The acid value of the A-B block copolymer, as measured by titration with a 0.1 mol/L ethanol solution of potassium hydroxide, was 146.9 mgKOH/g. It was ascertained that the acid value was almost the same as the acid value calculated from the monomer composition.

In another container, 44.2 parts of 28% ammonia water and 246.3 parts of water were placed to prepare an aqueous ammonia solution. In another separate container, 29.1 parts of sodium hydroxide and 261.4 parts of water were placed to prepare an aqueous sodium hydroxide solution. The aqueous sodium hydroxide solution and the aqueous ammonia solution were added to the reaction solution in the mentioned order to neutralize the carboxy groups derived from methacrylic acid and make the reaction solution into an aqueous solution. Specifically, 50 mol% of the carboxy groups were neutralized with ammonia, and the remaining 50 mol% of the carboxy groups were neutralized with sodium hydroxide. Water was added thereto to adjust the solid content, and thus a solution of dispersant D-1 with a solid content of 25.0% was obtained.

(Production Examples 2 to 9 and Comparative Production Examples 1 to 5)

Solutions of dispersants D-2 to 9 and comparative dispersants C-1 to 5 were obtained in the same manner as in Production Example 1 except that the materials of the types and amounts (unit: part) shown in Tables 1 to 4 were used. The meanings of the abbreviations in the tables are shown below.

- DCMA: Dicyclopentanyl methacrylate
- IBXMA: Isobornyl methacrylate
- MMA: Methyl methacrylate
- EHMA: 2-Ethylhexyl methacrylate
- PPG: Propylene glycol monopropyl ether
- MTPG: Tripropylene glycol monomethyl ether
- MDPA: 3-Methoxy-N,N-dimethylpropanamide

Table 1

| Production Example | | 1 | 2 | 3 |
|---|---|---|---|---|
| Dispersant | | D-1 | D-2 | D-3 |
| BDG | | 290.5 | 290.5 | 290.5 |
| MPG | | 290.5 | 290.5 | 290.5 |
| Iodine | | 5.4 | 5.4 | 5.4 |
| V-70 | | 20.1 | 20.1 | 20.1 |
| Chain A | BzMA | 110.0 | 110.0 | 110.0 |
| | CHMA | 132.0 | | |
| | DCMA | | 132.0 | |
| | IBXMA | | | 132.0 |
| | NIS | 0.43 | 0.43 | 0.43 |
| | Mn | 5, 000 | 5,300 | 5,100 |
| | PDI | 1.20 | 1.13 | 1.15 |
| | Tg (calculated value) (°C) | 69.2 | 110.5 | 102.3 |

(continued)

| Production Example | | 1 | 2 | 3 |
|---|---|---|---|---|
| Chain B | BzMA | 187.9 | 187.9 | 187.9 |
| | MAA | 125.2 | 125.2 | 125.2 |
| | MAA content (%) | 40.0 | 40.0 | 40.0 |
| | Mn | 5,700 | 5,200 | 5,800 |
| A-B Block copolymer | Mn | 10, 700 | 10, 500 | 10, 900 |
| | PDI | 1.31 | 1.29 | 1.29 |
| | Acid value (mgKOH/g) | 146.9 | 147.1 | 146.1 |
| | Neutralization ratio of carboxy groups (NaOH/ammonia (molar ratio)) | 50/50 | 50/50 | 50/50 |

Table 2

| Production Example | | 4 | 5 | 6 | | |
|---|---|---|---|---|---|---|
| Comparative Production Example | | | | | 1 | I 2 |
| Dispersant | | D-4 | D-5 | D-6 | C-1 | C-2 |
| PPG | | 470.0 | 470.0 | 470.0 | 470.0 | 470.0 |
| Iodine | | 4.3 | 4.3 | 4.3 | 4.3 | 4.3 |
| V-70 | | 15.5 | 15.5 | 15.5 | 15.5 | 15.5 |
| Chain A | BzMA | 74.0 | 74.0 | 74.0 | 74.0 | 74.0 |
| | CHMA | 176.2 | 176.2 | 176.2 | 176.2 | 176.2 |
| | NIS | 0.34 | 0.34 | 0.34 | 0.34 | 0.34 |
| | Mn | 4, 900 | 4, 900 | 4, 900 | 4, 900 | 4, 900 |
| | PDI | 1.20 | 1.20 | 1.20 | 1.20 | 1.20 |
| | Tg (calculated value) (°C) | 73.8 | 73.8 | 73.8 | 73.8 | 73.8 |
| Chain B | CHMA | 47.2 | 47.2 | 47.2 | 47.2 | 47.2 |
| | MMA | 55.0 | 55.0 | 55.0 | 55.0 | 55.0 |
| | MAA | 90.3 | 90.3 | 90.3 | 90.3 | 90.3 |
| | MAA content (%) | 46.9 | 46.9 | 46.9 | 46.9 | 46.9 |
| | Mn | 4,500 | 4,500 | 4,500 | 4,500 | 4,500 |
| A-B Block copolymer | Mn | 9,400 | 9,400 | 9,400 | 9,400 | 9,400 |
| | PDI | 1.29 | 1.29 | 1.29 | 1.29 | 1.29 |
| | Acid value (mgKOH/g) | 131.8 | 131.8 | 131.8 | 131.8 | 131.8 |
| | Neutralization ratio of carboxy groups (NaOH/ammonia (molar ratio)) | 50/50 | 70/30 | 30/70 | 100/0 | 0/100 |

Table 3

| Production Example | 7 | 8 | 9 |
|---|---|---|---|
| Dispersant | D-7 | D-8 | D-9 |
| BDG | 367.6 | | |
| MPG | 367.6 | | |
| MTPG | | 1069.7 | |
| MDPA | | | 1120.6 |

(continued)

| Production Example | | 7 | 8 | 9 |
|---|---|---|---|---|
| Iodine | | 9.1 | 4.0 | 9.1 |
| V-70 | | 33.5 | 16.8 | 33.5 |
| Chain A | BzMA | 165.0 | 165.0 | 165.0 |
| | CHMA | 85.4 | 85.4 | 85.4 |
| | MMA | 50.2 | 50.2 | 50.2 |
| | NIS | 0.68 | 0.34 | 0.68 |
| | Mn | 3,000 | 7,500 | 3,200 |
| | PDI | 1.13 | 1.35 | 1.25 |
| | Tg (calculated value) (°C) | 69.5 | 69.5 | 69.5 |
| Chain B | BzMA | 274.1 | 274.1 | 542.8 |
| | MAA | 117.3 | 117.3 | 234.6 |
| | MAA content (%) | 30.0 | 30.0 | 30.0 |
| | Mn | 4,500 | 7,000 | 7,000 |
| A-B Block copolymer | Mn | 7,500 | 14,500 | 10,200 |
| | PDI | 1.23 | 1.46 | 1.36 |
| | Acid value (mgKOH/g) | 110.0 | 110.1 | 110.3 |
| | Neutralization ratio of carboxy groups (NaOH/ammonia (molar ratio)) | 50/50 | 50/50 | 50/50 |

Table 4

| Comparative Production Example | | 3 | 4 | 5 |
|---|---|---|---|---|
| Dispersant | | C-3 | C-4 | C-5 |
| BDG | | 178.4 | 290.3 | 290.3 |
| MPG | | 178.4 | 290.3 | 290.3 |
| Iodine | | 2.0 | 5.4 | 5.4 |
| V-70 | | 8.4 | 20.1 | 20.1 |
| Chain A | BzMA | 110.0 | 110.0 | 110.0 |
| | CHMA | 132.0 | 132.0 | |
| | EHMA | | | 132.0 |
| | NIS | 0.14 | 0.43 | 0.43 |
| | Mn | 11,000 | 5,100 | 5,900 |
| | PDI | 1.36 | 1.21 | 1.19 |
| | Tg (calculated value) (°C) | 69.2 | 69.2 | 15.6 |
| Chain B | BzMA | 62.6 | 250.5 | 187.9 |
| | MAA | 41.7 | 62.6 | 125.2 |
| | MAA content (%) | 40.0 | 20.0 | 40.0 |
| | Mn | 5,300 | 6,200 | 4,900 |

(continued)

| Comparative Production Example | | 3 | 4 | 5 |
|---|---|---|---|---|
| A-B Block copolymer | Mn | 16,300 | 10,300 | 10,800 |
| | PDI | 1.51 | 1.23 | 1.26 |
| | Acid value (mgKOH/g) | 78.6 | 73.6 | 147.0 |
| | Neutralization ratio of carboxy groups (NaOH/ammonia (molar ratio)) | 50/50 | 50/50 | 50/50 |

<Production of Emulsion Binder>

(Reference Production Example)

In a reaction container, 131.7 parts of BDG, 0.5 parts of iodine, 2.6 parts of V-70, 44 parts of BzMA, 13 parts of 2-hydroxyethyl methacrylate (HEMA), and 0.11 parts of NIS were placed. The resulting mixture was heated to 40°C and stirred to perform polymerization for 4 hours, and thus a polymer was formed. The polymerization rate calculated from the solid content was about 100%. Mn and PDI of the polymer, as measured by GPC, were 15,000 and 1.31 respectively.

To the polymerization solution, 52.8 parts of BzMA and 12.9 parts of MAA were added to perform polymerization for 4.5 hours, and thus a block copolymer was formed. The polymerization rate was about 100%, and therefore it was ascertained that almost all the monomers were polymerized. Mn, PDI, and acid value of the block copolymer were 23,000, 1.45, and 69.0 mgKOH/g respectively.

To the resulting polymerization solution, a mixture of 10 parts of 28% ammonia water and 253.4 parts of water was added to obtain a low-viscosity emulsion (emulsion binder) with a slightly yellowish, semitransparent appearance giving a feeling of transparency. The viscosity of the emulsion, as measured by a B-type viscometer, was 79.6 mPa·s, and the solid content was 24.6%. The number average particle size of the emulsion particles was 115 nm.

<Production (1) of Pigment Dispersion>

(Example 1)

With a disper, 60 parts of titanium dioxide (trade name "CR-50," manufactured by ISHIHARA SANGYO KAISHA, LTD.), 12 parts of dispersant D-1, 6 parts of 1,2-hexanediol, and 22 parts of ion-exchanged water were mixed, and then the resulting mixture was dispersed using a horizontal bead mill (trade name "DYNO-MILL KDL A," manufactured by SHINMARU ENTERPRISES CORPORATION) filled with 0.5 mmΦ zirconia beads (filling rate: 80%). Coarse particles were removed by filtration with a 5 μm membrane filter, and then the concentration was adjusted by addition of ion-exchanged water to obtain white pigment dispersion W-1 with a pigment concentration of 50%. The number average particle size of the pigment in pigment dispersion W-1 obtained was 295 nm. The viscosity, pH, and surface tension of pigment dispersion W-1 obtained were 13.5 mPa·s, 8.9, and 30.0 mN/m respectively.

(Examples 2 and 3 and Comparative Example 1)

White pigment dispersions W-2, W-3, and CW-1 were obtained in the same manner as in Example 1 except that the dispersants of the types shown in Table 5 were used. Physical properties of the pigment dispersions obtained are shown in Table 5.

<Evaluations (1)>

(Recovery from Sedimentation)

In a 2 mL polypropylene microtube, 1.5 g of the pigment dispersion diluted with water was placed. The diluted pigment dispersion was subjected to centrifugal separation at 9,000 rpm for 1 minute using a small-sized centrifugal separator (trade name "DISKBOY FB-4000," manufactured by Kurabo Industries Ltd.) to form a hard cake at the bottom of the microtube. The microtube was held vertically in such a way that the hard cake formed was on the lower side and then left to stand for 30 minutes in the room. Thereafter, shaking and mixing were performed by hand operation to evaluate the recovery from sedimentation according to the following evaluation criteria. The results are shown in Table 5. Note that "A+" and "A" are acceptable.

A+: Sedimentation disappears in a few times of shaking.
A: Sedimentation disappears in 10 times of shaking.
B: Sedimentation disappears in 20 times of shaking.
C: Sedimentation does not disappear by shaking.

(Redispersibility)

The pigment dispersion was dropped onto a glass plate and dried for 12 hours in a constant temperature and humidity chamber set at 60°C and a humidity of 40%, and then pure water was added to the dried matter formed. The dried matter with the water added thereto was observed visually and by a microscope to evaluate the redispersibility according to the following evaluation criteria. The results are shown in Table 5. Note that "A+" and "A" are acceptable. Furthermore, the number average particle size of the pigment after the redispersion was measured. The results are shown in Table 5.

[Redispersibility (Visual Observation)]

A+: Neither an aggregate nor a film is present, and the dried matter is redispersed.
A: A slight amount of aggregates are observed, but a film is not present.
B: An aggregate and a film are present, but a liquid is also present.
C: The dried matter is not redispersed.

[Redispersibility (Microscope)]

A+: An alien body such as an aggregate is not present.
A: A slight amount of aggregates are observed, but a film-like piece is not present.
B: An aggregate and a film-like piece are observed.
C: A large amount of alien bodies are present.

Table 5

|  | Example 1 | Example 2 | Example 3 | Comparative Example 1 |
|---|---|---|---|---|
| Pigment dispersion | W-1 | W-2 | W-3 | CW-1 |
| Dispersant used | D-1 | D-2 | D-3 | C-4 |
| Number average particle size (nm) | 295 | 305 | 304 | 299 |
| Viscosity (mPa·s) | 13.5 | 12.9 | 12.9 | 14.6 |
| pH | 8.9 | 8.8 | 8.9 | 8.9 |
| Surface tension (mN/m) | 30.0 | 30.0 | 30.5 | 30.2 |
| Recovery from sedimentation | A+ | A+ | A+ | B |
| Redispersibility (visual observation) | A+ | A+ | A+ | B |
| Redispersibility (microscope) | A+ | A+ | A+ | B |
| Redispersibility (number average particle size (nm)) | 321 | 311 | 326 | 532* |
| * Aggregates are removed. | | | | |

<Production (2) of Pigment Dispersion>

(Example 4)

Dispersion was performed in the same manner as in Example 1 using 20 parts of copper phthalocyanine blue (C.I. Pigment Blue 15:3, trade name "A-220," manufactured by Dainichiseika Color & Chemicals Mfg. Co., Ltd.), 28 parts of dispersant D-4, 1 part of BDG, and 51 parts of water. The concentration was adjusted by adding ion-exchanged water to obtain cyan pigment dispersion C-1 having a pigment concentration of 15%. The number average particle size of the pigment in pigment dispersion C-1 obtained was 105 nm. The viscosity, pH, and surface tension of pigment dispersion C-1 obtained were 3.2 mPa·s, 8.6, and 40.5 mN/m respectively.

(Examples 5 to 9 and Comparative Examples 2 to 5)

Cyan pigment dispersions C-2 to 6 and CC-1 to 4 were obtained in the same manner as in Example 4 except that the dispersants of the types shown in Tables 6 and 7 were used. Physical properties of the pigment dispersions obtained are shown in Tables 6 and 7.

<Evaluations (2)>

(Storage Stability)

Each pigment dispersion was stored at 70°C for 1 week. The number average particle size of the pigment in the pigment dispersion and the viscosity and pH of the pigment dispersion were measured after the storage. The results are shown in Tables 6 and 7. When a change in the number average particle size of the pigment in the pigment dispersion after the storage and a change in the viscosity of the pigment dispersion after the storage were small, the pigment dispersion was rated as "A," and when the changes were large, the pigment dispersion was rated as "C." The results are shown in Tables 6 and 7.

(Redispersibility)

The same evaluations as in "Redispersibility" in "Evaluations (1)" were conducted. The results are shown in Tables 6 and 7.

Table 6

| | | Example 4 | Example 5 | Example 6 | Example 7 | Example 8 | Example 9 |
|---|---|---|---|---|---|---|---|
| Pigment dispersion | | C-1 | C-2 | C-3 | C-4 | C-5 | C-6 |
| Dispersant used | | D-4 | D-5 | D-6 | D-7 | D-8 | D-9 |
| After dispersion | Number average particle size (nm) | 105 | 106 | 106 | 103 | 106 | 101 |
| | Viscosity (mPa·s) | 3.20 | 3.30 | 3.12 | 3.20 | 3.60 | 3.50 |
| | pH | 8.6 | 8.9 | 8.6 | 8.8 | 8.8 | 8.8 |
| | Surface tension (mN/m) | 40.5 | 40.8 | 40.4 | 40.5 | 40.3 | 40.1 |
| After storage | Number average particle size (nm) | 104 | 103 | 108 | 103 | 105 | 99 |
| | Viscosity (mPa·s) | 3.12 | 3.30 | 3.09 | 3.17 | 3.55 | 3.40 |
| | pH | 8.6 | 8.8 | 8.5 | 8.8 | 8.6 | 8.8 |
| Storage stability | | A | A | A | A | A | A |
| Redispersibility (visual observation) | | A+ | A+ | A+ | A+ | A+ | A+ |
| Redispersibility (microscope) | | A+ | A+ | A | A+ | A+ | A+ |
| Redispersibility (number average particle size (nm)) | | 110 | 108 | 114 | 106 | 106 | 102 |

Table 7

| | | Comparative Example 2 | Comparative Example 3 | Comparative Example 4 | Comparative Example 5 |
|---|---|---|---|---|---|
| Pigment dispersion | | CC-1 | CC-2 | CC-3 | CC-4 |
| Dispersant used | | C-1 | C-2 | C-3 | C-5 |
| After dispersion | Number average particle size (nm) | 105 | 106 | 256 | 106 |
| | Viscosity (mPa·s) | 3.50 | 3.20 | 8.60 | 3.30 |
| | pH | 9.0 | 8.5 | 8.6 | 8.8 |
| | Surface tension (mN/m) | 40.3 | 40.5 | 40.6 | 40.4 |
| After storage | Number average particle size (nm) | 105 | 105 | gelation | 123 |
| | Viscosity (mPa·s) | 3.50 | 3.30 | - | 3.06 |
| | pH | 9.0 | 8.4 | - | 8.8 |
| Storage stability | | A | A | C | C |
| Redispersibility (visual observation) | | A+ | B | - | A+ |
| Redispersibility (microscope) | | A+ | B | - | A+ |
| Redispersibility (number average particle size (nm)) | | 109 | 213 | - | 119 |

<Production (1) of Ink>

(Application Examples 1 to 6 and Comparative Application Examples 1 and 2)

Pigment dispersions of the types shown in Table 8 were prepared. Mixed were 40 parts of the pigment dispersion, 44 parts of water, 5 parts of 1,2-hexanediol, 10 parts of glycerol, and 1 part of a surfactant (trade name "SURFYNOL 465," manufactured by Nissin Chemical Industry Co., Ltd.), and the resulting mixture was sufficiently stirred and then filtered with a membrane filter having a pore size of 10 $\mu$m to prepare inkjet inks IC-1 to 6 and ICC-1 and 2.

<Evaluations 3>

Each ink prepared was filled in a separate cartridge, and the cartridge was installed in an inkjet printer (trade name "EM-930C," manufactured by Seiko Epson Corporation). A solid image (printed matter) with the maximum print density was recorded using this inkjet printer on plain paper (trade name "ColorLok Paper," manufactured by HP Inc., paper containing a large amount of an inorganic filler (calcium carbonate)).

(Ejection Stability)

Ejection defects during recording, such as ink droplets not being ejected and the ink being splashed, were observed to evaluate the ejection stability of the ink according to the following evaluation criteria. The results are shown in Table 8. Note that "A" is acceptable.

A: No ejection defects are observed.
B: Minute splashes are observed in addition to ink droplets.
C: The ejection stopped during printing, or splashes of the ink are observed.

(Appearance of Printed Matter)

The appearance of the printed matter recorded was visually observed and evaluated according to the following evaluation criteria, and the results are shown in Table 8. Note that "A" is acceptable.

A: No streaks and no unevenness are observed, so that the printed matter is uniform.
C: A streak or unevenness is observed.

(Optical Density)

The optical density (OD value) of the recorded image was measured five times using an optical densitometer (trade name "Macbeth RD-914," manufactured by Gretag Macbeth LLC.) to calculate the average value. The results are shown in Table 8.

Table 8

| Application Example | 1 | 2 | 3 | 4 | 5 | 6 | | |
|---|---|---|---|---|---|---|---|---|
| Comparative Application Example | | | | | | | 1 | 2 |
| Ink name | IC-1 | IC-2 | IC-3 | IC-4 | IC-5 | IC-6 | ICC-1 | ICC-2 |
| Pigment dispersion used | C-1 | C-2 | C-3 | C-4 | C-5 | C-6 | CC-1 | CC-4 |
| Ejection stability | A | A | A | A | A | A | A | B |
| Appearance of printed matter | A | A | A | A | A | A | A | B |
| Optical density | 1.41 | 1.38 | 1.43 | 1.40 | 1.38 | 1.38 | 1.26 | 1.39 |

<Production (2) of Ink>

(Application Examples 7 to 12 and Comparative Application Examples 3 to 5)

Pigment dispersions of the types shown in Table 9 were prepared. Mixed were 16.0 parts of the emulsion binder produced in Reference Production Example, 28.6 parts of the pigment dispersion, 18.0 parts of propylene glycol, 0.5 parts of a surfactant (trade name "SILFACE SAG503A," manufactured by Nissin Chemical Industry Co., Ltd.), 0.7 parts of a polyethylene wax, and 36.2 parts of water, and the resulting mixture was sufficiently stirred and then filtered with a membrane filter having a pore size of 5 $\mu$m to prepare inkjet inks IC-7 to 12 and ICC-3 to 5 for film printing. The viscosity of each ink prepared is shown in Table 9.

<Evaluations (4)>

An inkjet printer with a plate heater (trade name "MMP-825H," manufactured by MASTERMIND CO. LTD.) and substrates of the types described below were prepared. Each ink prepared was filled in a separate cartridge, and the cartridge was installed in the inkjet printer prepared. An image (printed matter) was recorded on the substrates of the types described below using this printer. Specifically, after each substrate was heated with the plate heater so that the surface temperature would become 55°C, the ink was applied thereon to perform printing, and the substrate was then dried for 10 minutes in a constant temperature chamber heated to 90°C, and thus printed matter was obtained.

- OPP film (polypropylene film, manufactured by Futamura Chemical Co., Ltd., thickness 50 $\mu$m)
- PET film (polyethylene terephthalate film, manufactured by Futamura Chemical Co., Ltd., thickness 50 $\mu$m)

(Ejection Stability and Appearance of Printed Matter)

The same evaluations as in "Ejection Stability" and "Appearance of Printed Matter" in "Evaluations (3)" were conducted. The results are shown in Table 9.

(Adhesion)

A cellophane adhesive tape was pressed to the recorded image sufficiently and then peeled. The extent of the peeling of the image from the substrate was visually observed to evaluate the adhesion of the image according to the following evaluation criteria. The results are shown in Table 9. Note that "A$^+$" and "A" are acceptable.

A$^+$: The image is not peeled off at all.
A: The image is peeled off slightly.

B: The area where the image is peeled off is smaller than the area where the image is not peeled off.
C: The area where the image is peeled off is larger than the area where the image is not peeled off.

(Rub Resistance (Dry Rub Resistance and Wet Rub Resistance))

A dry rubbing test and a wet rubbing test were conducted using a Gakushin-Type Rubbing Tester (trade name "RT-300," manufactured by DAIEI KAGAKU SEIKI MFG. CO., LTD.) as follows: the dry rubbing test was conducted by rubbing the surface of the image back and forth 100 times with a load of 500 g using dry white cloth, and the wet rubbing test was conducted by rubbing the surface of the image back and forth 100 times with a load of 200 g using white cloth wetted with water. The extent of the peeling of the image after the rubbing test was visually observed to evaluate the rub resistance (dry rub resistance and wet rub resistance) of the image according to the following evaluation criteria. The results are shown in Table 9. Note that "A+," "A," and "B" are acceptable.

A+: The image is not peeled off at all.
A: The image is peeled off slightly.
B: The area where the image is peeled off is smaller than the area where the image is not peeled off.
C: The area where the image is peeled off is larger than the area where the image is not peeled off.

(Alcohol Resistance)

A 70% aqueous ethanol solution was dropped onto the image and left to stand for 10 seconds. Thereafter, the image was rubbed back and forth a plurality of times with a cotton swab. The number of times of the reciprocation was counted until the image was peeled off to evaluate the alcohol resistance of the image according to the following evaluation criteria. The results are shown in Table 9. Note that "A+" and "A" are acceptable.

A+: 20 times or more.
A: 10 times to less than 20 times
B: 5 times to less than 10 times
C: The image is peeled off immediately or in less than 5 times.

Table 9

| Application Example | | 7 | 8 | 9 | 10 | 11 | 12 | | | |
|---|---|---|---|---|---|---|---|---|---|---|
| Comparative Application Example | | | | | | | | 3 | 4 | 5 |
| Ink name | | IC-7 | IC-8 | IC-9 | IC-10 | IC-11 | IC-12 | ICC-3 | ICC-4 | ICC-5 |
| Pigment dispersion used | | C-1 | C-2 | C-3 | C-4 | C-5 | C-6 | CC-1 | CC-2 | CC-4 |
| Viscosity (mPa·s) | | 3.2 | 3.1 | 3.1 | 3.1 | 3.4 | 3.1 | 3.2 | 3.2 | 3.2 |
| Ejection stability | | A | A | A | A | A | A | A | A | A |
| Appearance of printed matter | | A | A | A | A | A | A | A | A | A |
| OPP | Adhesion | A+ | A | A+ | A | A | A | A | A | B |
| | Dry rub resistance | A+ | A | A+ | A | A | A | A | A+ | C |
| | Wet rub resistance | A | A | A+ | A | A | B | C | A+ | B |
| | Alcohol resistance | A | A | A | A | B | B | C | C | C |
| PET | Adhesion | A | A | A+ | A | A | A | A | B | B |
| | Dry rub resistance | A+ | A | A | A | A | A | C | A | C |
| | Wet rub resistance | A | A | A+ | A+ | A | B | C | A | C |
| | Alcohol resistance | A | A | A | A | B | B | B | C | C |

<Production (3) of Pigment Dispersion>

(Examples 10 to 15)

Color pigments described below were prepared. Then, pigment dispersions Y-1, M-1, Bk-1, R-1, G-1, and O-1 were obtained in the same manner as in Example 4 except that the respective color pigments prepared were used in place of copper phthalocyanine blue. Physical properties of the pigment dispersions obtained are shown in Table 10.

- Yellow pigment: C.I. Pigment Yellow 155, azo-based pigment, trade name "CFY 6241," manufactured by Dainichiseika Color & Chemicals Mfg. Co., Ltd.
- Magenta pigment: C.I. Pigment Red 122, quinacridone pigment, trade name "CFR-130," manufactured by Dainichiseika Color & Chemicals Mfg. Co., Ltd.
- Black pigment: C.I. Pigment Black 7, carbon black, trade name "Raven 1200," manufactured by BIRLA
- Red pigment: C.I. Pigment Red 254, diketopyrrolopyrrole pigment, trade name "CFR 6742," manufactured by Dainichiseika Color & Chemicals Mfg. Co., Ltd.
- Green pigment: C.I. Pigment Green 36, halogenated copper phthalocyanine pigment, trade name "CFG 6450," manufactured by Dainichiseika Color & Chemicals Mfg. Co., Ltd.
- Orange pigment: C.I. Pigment Orange 43, condensed polycyclic pigment, trade name "CFO 6292," manufactured by Dainichiseika Color & Chemicals Mfg. Co., Ltd.

<Evaluations (5)>

(Storage Stability and Redispersibility)

The same evaluations as in "Storage Stability" and "Redispersibility" in "Evaluations (2)" were conducted. The results are shown in Table 10.

Table 10

| | | Example 4 | Example 10 | Example 11 | Example 12 | Example 13 | Example 14 | Example 15 |
|---|---|---|---|---|---|---|---|---|
| Pigment dispersion | | C-1 | Y-1 | M-1 | Bk-1 | R-1 | G-1 | O-1 |
| Dispersant used | | D-4 | D-4 | D-4 | D-4 | D-4 | D-4 | D-4 |
| After dispersion | Number average particle size (nm) | 105 | 156 | 120 | 89 | 117 | 110 | 136 |
| | Viscosity (mPa·s) | 3.2 | 4.1 | 3.7 | 3.1 | 2.9 | 2.6 | 3.2 |
| | pH | 8.8 | 8.8 | 8.8 | 8.9 | 8.8 | 8.9 | 8.8 |
| | Surface tension (mN/m) | 40.5 | 40.2 | 40.6 | 40.3 | 40.4 | 41.1 | 40.6 |
| After storage | Number average particle size (nm) | 104 | 153 | 119 | 90 | 117 | 108 | 138 |
| | Viscosity (mPa·s) | 3.12 | 4.0 | 3.7 | 3.0 | 3.0 | 2.7 | 3.2 |
| | pH | 8.7 | 8.8 | 8.8 | 8.8 | 8.8 | 8.8 | 8.8 |
| Storage stability | | A | A | A | A | A | A | A |
| Redispersibility (visual observation) | | A$^+$ | A$^+$ | A$^+$ | A$^+$ | A$^+$ | A$^+$ | A$^+$ |
| Redispersibility (microscope) | | A$^+$ | A | A$^+$ | A$^+$ | A$^+$ | A$^+$ | A |

(continued)

| | Example 4 | Example 10 | Example 11 | Example 12 | Example 13 | Example 14 | Example 15 |
|---|---|---|---|---|---|---|---|
| Redispersibility (number average particle size (nm)) | 120 | 163 | 119 | 99 | 118 | 108 | 149 |

<Production (3) of Ink>

(Application Examples 13 to 18)

Inkjet inks IY-1, IM-1, IBk-1, IR-1, IG-1, and IO-1 were prepared in the same manner as in Application Example 1 except that the pigment dispersions of the types shown in Table 11 were used.

<Evaluations (6)>

(Ejection Stability, Appearance of Printed Matter, and Optical Density)

The same evaluations as in "Ejection Stability," "Appearance of Printed Matter," and "Optical Density" in "Evaluations (3)" were conducted. The results are shown in Table 11.

Table 11

| Application Example | 1 | 13 | 14 | 15 | 16 | 17 | 18 |
|---|---|---|---|---|---|---|---|
| Ink name | IC-1 | IY-1 | IM-1 | IBk-1 | IR-1 | IG-1 | IO-1 |
| Pigment dispersion used | C-1 | Y-1 | M-1 | Bk-1 | R-1 | G-1 | O-1 |
| Ejection stability | A | A | A | A | A | A | A |
| Appearance of printed matter | A | A | A | A | A | A | A |
| Optical density | 1.41 | 1.27 | 1.38 | 1.46 | 1.39 | 1.43 | 1.31 |

<Production (4) of Ink>

(Application Examples 19 to 24)

Inkjet inks IY-2, IM-2, IBk-2, IR-2, IG-2, and IO-2 for film printing were prepared in the same manner as in Application Example 7 except that the pigment dispersions of the types shown in Table 12 were used. The viscosity of each ink prepared is shown in Table 12.

<Evaluations (7)>

(Ejection Stability, Appearance of Printed Matter, Adhesion, Rub Resistance, and Alcohol Resistance)

The same evaluations as in "Ejection Stability" and "Appearance of Printed Matter" in "Evaluations (3)" and "Adhesion," "Rub Resistance," and "Alcohol Resistance" in "Evaluations (4)" were conducted. The results are shown in Table 12.

Table 12

| Application Example | 7 | 19 | 20 | 21 | 22 | 23 | 24 |
|---|---|---|---|---|---|---|---|
| Ink name | IC-7 | IY-2 | IM-2 | IBk-2 | IR-2 | IG-2 | IO-2 |
| Pigment dispersion used | C-1 | Y-1 | M-1 | Bk-1 | R-1 | G-1 | O-1 |
| Viscosity (mPa·s) | 3.2 | 3.4 | 3.3 | 3.0 | 3.0 | 3.0 | 3.1 |
| Ejection stability | A | A | A | A | A | A | A |

(continued)

| Application Example | | 7 | 19 | 20 | 21 | 22 | 23 | 24 |
|---|---|---|---|---|---|---|---|---|
| Appearance of printed matter | | A | A | A | A | A | A | A |
| OPP | Adhesion | A+ | A+ | A+ | A+ | A | A+ | A |
| | Dry rub resistance | A+ | A | A+ | A | A | A+ | A |
| | Wet rub resistance | A | A | A+ | A | A | A | A |
| | Alcohol resistance | A | A | A+ | A | A | A | A |
| PET | Adhesion | A | A | A+ | A | A | A | A |
| | Dry rub resistance | A+ | A | A | A | A | A+ | A |
| | Wet rub resistance | A | A | A | A+ | A | A | A |
| | Alcohol resistance | A | A | A | A | A | A | A |

**Industrial Applicability**

The pigment disersion of the present invention is useful as a pigment dispersion to be used for preparing an aqueous inkjet ink.

**Claims**

1. A pigment dispersion to be used for preparing an aqueous inkjet ink, the pigment dispersion comprising:

   a pigment;
   a dispersant;
   a water-soluble organic solvent; and
   water, wherein
   the dispersant is an A-B block copolymer comprising: a polymer chain A; and a polymer chain B, the A-B block copolymer having a number average molecular weight of 5,000 to 15,000, a polydispersity index (weight average molecular weight/number average molecular weight) of 1.2 to 1.6, and an acid value of 100 mgKOH/g or higher,
   the polymer chain A is a polymer block comprising: at least one constituent unit (A-1) selected from the group consisting of methyl methacrylate and benzyl methacrylate; and at least one constituent unit (A-2) selected from the group consisting of cyclohexyl methacrylate, dicyclopentanyl methacrylate, and isobornyl methacrylate, provided that the total content of the constituent unit (A-1) and the constituent unit (A-2) is 70% by mass or more, the polymer block having a glass transition temperature of 50°C or higher, a number average molecular weight of 2,000 to 10,000, and a polydispersity index of 1.1 to 1.5,
   the polymer chain B is a polymer block comprising: a constituent unit (B-1) derived from methacrylic acid; and a constituent unit (B-2) derived from at least one selected from the group consisting of methyl methacrylate, benzyl methacrylate, and cyclohexyl methacrylate, provided that the content of the constituent unit (B-1) is 25 to 50% by mass, the polymer block having a number average molecular weight of 2,000 to 10,000, and
   in the A-B block copolymer, 30 to 70 mol% of carboxy groups derived from methacrylic acid are neutralized with ammonia, and 30 to 70 mol% of the carboxy groups derived from methacrylic acid are neutralized with at least any one of sodium hydroxide and potassium hydroxide.

2. The pigment dispersion according to claim 1, wherein in the A-B block copolymer, 40 to 60 mol% of the carboxy groups derived from methacrylic acid are neutralized with ammonia, and 40 to 60 mol% of the carboxy groups derived from methacrylic acid are neutralized with sodium hydroxide.

3. The pigment dispersion according to claim 1 or 2, wherein

   the content of the pigment is 5 to 60% by mass,
   the content of the dispersant is 0.5 to 20% by mass,
   the content of the water-soluble organic solvent is 30% by mass or less, and
   the content of water is 20 to 80% by mass.

4. The pigment dispersion according to any one of claims 1 to 3, wherein the water-soluble organic solvent is at least one selected from the group consisting of diethylene glycol monobutyl ether, triethylene glycol monobutyl ether, tetraethylene glycol monobutyl ether, propylene glycol monomethyl ether, propylene glycol monopropyl ether, dipropylene glycol monomethyl ether, tripropylene glycol monomethyl ether, 3-methoxy-N,N-dimethylpropanamide, and 3-butoxy-N,N-dimethylpropanamide.

5. The pigment dispersion according to any one of claims 1 to 4, wherein

the pigment is at least one selected from the group consisting of a yellow pigment, a red pigment, a blue pigment, a green pigment, an orange pigment, a black pigment, and a white pigment,
the yellow pigment is at least one selected from the group consisting of C.I. Pigment Yellow 74, 150, 155, and 180,
the red pigment is at least one selected from the group consisting of C.I. Pigment Red 122, 202, 254, and 269, and solid solutions thereof, and C.I. Pigment Violet 19 and 23, and solid solutions thereof,
the blue pigment is at least one selected from the group consisting of C.I. Pigment Blue 15:3, 15:4, and 15:6,
the green pigment is at least one selected from the group consisting of C.I. Pigment Green 7, 36, and 58,
the orange pigment is C.I. Pigment Orange 43,
the black pigment is C.I. Pigment Black 7, and
the white pigment is C.I. Pigment White 6.

## INTERNATIONAL SEARCH REPORT

| International application No. |
|---|
| **PCT/JP2023/027607** |

| A. | CLASSIFICATION OF SUBJECT MATTER |
|---|---|

*C09D 11/326*(2014.01)i; *B41J 2/01*(2006.01)i; *B41M 5/00*(2006.01)i; *C09D 17/00*(2006.01)i
FI: C09D11/326; C09D17/00; B41M5/00 120; B41J2/01 501

According to International Patent Classification (IPC) or to both national classification and IPC

| B. | FIELDS SEARCHED |
|---|---|

Minimum documentation searched (classification system followed by classification symbols)

C09D11/326; B41J2/01; B41M5/00; C09D17/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2006-199928 A (KAO CORPORATION) 03 August 2006 (2006-08-03) claims, examples | 1-5 |
| A | JP 2022-073013 A (DAINICHISEIKA COLOR & CHEMICALS MFG. CO., LTD.) 17 May 2022 (2022-05-17) claims, examples | 1-5 |
| A | JP 6886062 B1 (DAINICHISEIKA COLOR & CHEMICALS MFG. CO., LTD.) 16 June 2021 (2021-06-16) claims, examples | 1-5 |
| A | JP 2017-031287 A (DAINICHISEIKA COLOR & CHEMICALS MFG. CO., LTD.) 09 February 2017 (2017-02-09) claims, examples | 1-5 |
| A | JP 2012-193249 A (DAINICHISEIKA COLOR & CHEMICALS MFG. CO., LTD.) 11 October 2012 (2012-10-11) claims, examples | 1-5 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 August 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/027607**

| Patent document cited in search report | | | Publication date (day/month/year) | Patent family member(s) | | | Publication date (day/month/year) |
|---|---|---|---|---|---|---|---|
| JP | 2006-199928 | A | 03 August 2006 | CN | 101048471 | A | |
| | | | | US | 2007/0289485 | A1 | |
| | | | | claims, examples | | | |
| | | | | GB | 2433941 | A | |
| | | | | WO | 2006/046759 | A1 | |
| JP | 2022-073013 | A | 17 May 2022 | (Family: none) | | | |
| JP | 6886062 | B1 | 16 June 2021 | CN | 115989149 | A | |
| | | | | EP | 4206250 | A1 | |
| | | | | claims, examples | | | |
| | | | | KR | 10-2023-0050432 | A | |
| | | | | TW | 202219077 | A | |
| | | | | WO | 2022/044825 | A1 | |
| JP | 2017-031287 | A | 09 February 2017 | (Family: none) | | | |
| JP | 2012-193249 | A | 11 October 2012 | CN | 103443218 | A | |
| | | | | EP | 2687561 | A1 | |
| | | | | claims, examples | | | |
| | | | | KR | 10-2013-0135344 | A | |
| | | | | TW | 201243008 | A | |
| | | | | US | 9102777 | B2 | |
| | | | | WO | 2012/124212 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5403313 B
- JP 2008045023 A
- JP 4157868 B
- JP 2009515007 W
- WO 2013008691 A